# EUROPÄISCHE PATENTANMELDUNG

(11) **EP 2 248 961 A2**
(43) Veröffentlichungstag der Anmeldung: **10.11.2010**
(21) Anmeldenummer: 10162006.0
(22) Anmeldetag: 05.05.2010
(51) Int. Cl.: E04F 15/02

(54) **Befestigungsmittel**

(30) Priorität: 08.05.2009 DE 202009006712 U
(71) Anmelder: Firstwood GmbH, 14727 Premnitz (DE)
(72) Erfinder: Zemlin, Detlef, 14715 Stechow-Ferchesar (DE)
(74) Vertreter: Bittner, Thomas L.

(57) **Zusammenfassung**

Die Erfindung betrifft ein Befestigungsmittel (1) zum Befestigen eines Verkleidungsbauteils, insbesondere einer Diele, mit einem Schaftteil (2), welches wenigsten einen Schaftverankerungsvorsprung (3) aufweist, und einem am Schaftteil gebildeten Kopfteil (4), welches als Flachkopf gebildet ist und auf einer Seite wenigstens einen Kopfverankerungsvorsprung (5) aufweist.

## Beschreibung

Die Erfindung bezieht sich auf ein Befestigungsmittel zum Befestigen von Verkleidungsbauteilen, insbesondere von Dielen.

### Hintergrund der Erfindung

Verkleidungsbauteile, zum Beispiel Dielen, werden häufig zum Belegen von Böden, zum Beispiel von Terrassenböden, verwendet. Dabei werden die Verkleidungsbauteile üblicherweise mit Nägeln oder Schrauben, welche durch die Verkleidungsbauteile geschlagen bzw. geschraubt werden, an einer Unterkonstruktion befestigt. Die Köpfe der Nägel bzw. Schrauben bleiben somit an der Oberseite des Verkleidungsbauteils sichtbar. Diese Stellen beeinträchtigen die Optik der belegten Böden erheblich. Weiterhin können diese Stellen zu Materialschäden führen. Beim Durchschlagen bzw. Durchschrauben der Verkleidungsbauteile wird die Oberfläche des Verkleidungsbauteils beschädigt. Aus dem Dokument DE 20 2004 017 477 U1 ist ein Befestigungsmittel bekannt, dass zwischen zwei Brettern in Nuten angeordnet und anschließend mit einer Unterkonstruktion verbunden wird. Dabei bleibt die Oberfläche der Bretter unbeschädigt. Für die Befestigung der endseitigen Bretter eines Belags ist im Dokument DE 20 2004 017 477 U1 ein Anfangs-Verbinder mit einer komplizierten Winkelform vorgesehen. Der Anfangs-Verbinder wird mit der Unterkonstruktion und an einer Seite der endseitigen Bretter verschraubt. Damit ist an diesen Seiten der Bretter ebenfalls die Optik beeinträchtig und die Gefahr von Materialschäden gegeben.

### Zusammenfassung der Erfindung

Aufgabe der Erfindung ist es, ein Befestigungsmittel zum Befestigen von Verkleidungsbauteilen bereitzustellen, wobei die Verkleidungsbauteile mit einer Unterkonstruktion verbunden werden, ohne das die Oberfläche der Verkleidungsbauteile beschädigt wird. Das Befestigungsmittel ist insbesondere zum Befestigen von endseitigen Verkleidungsbauteilen geeignet.

Die Aufgabe wird erfindungsgemäß gelöst durch ein Befestigungsmittel nach dem unabhängigen Anspruch 1. Vorteilhafte Ausgestaltungen der Erfindung sind Gegenstand von abhängigen Unteransprüchen.

Nach der Erfindung ist ein Befestigungsmittel zum Befestigen eines Verkleidungsbauteils, insbesondere einer Diele, mit einem Schaftteil, welches wenigstens einen Schaftverankerungsvorsprung aufweist, und einem an dem Schaftteil gebildeten Kopfteil, welches als Flachkopf gebildet ist und auf einer Seite wenigstens einen Kopfverankerungsvorsprung aufweist, geschaffen.

Das Befestigungsmittel verbindet ein Verkleidungsbauteil mit einer Unterkonstruktion. Dazu wird in der Unterkonstruktion ein Loch bereitgestellt, in welchem das Schaftteil angeordnet wird. Aufgrund der Schaftverankerungsvorsprünge wird das Schaftteil sicher und stabil in der Unterkonstruktion gehalten. An der Unterseite des Verkleidungsbauteils wird eine Aussparung bereitgestellt. Die Aussparung nimmt das Kopfteil des Befestigungsmittels auf. Die Kopfverankerungsvorsprüngen gewähren sicheren Halt des Verkleidungsbauteils am Kopfteil, so dass die Unterkonstruktion und das Verkleidungsbauteil fest miteinander verbunden sind. Die Oberseite des Verkleidungsbauteils wird dabei nicht beschädigt.

Eine bevorzugte Weiterbildung der Erfindung sieht vor, dass der wenigstens eine Schaftverankerungsvorsprung und/oder der wenigstens eine Kopfverankerungsvorsprung mit einer Schräge gebildet sind.

Bei einer zweckmäßigen Ausgestaltung der Erfindung kann vorgesehen sein, dass die Schräge des wenigstens einen Schaftverankerungsvorsprungs und die Schräge des wenigstens einen Kopfverankerungsvorsprungs eine entgegen gesetzte Neigung zueinander aufweisen.

Eine vorteilhafte Ausführungsform der Erfindung sieht vor, dass der wenigstens eine Schaftverankerungsvorsprung und/oder der wenigstens eine Kopfverankerungsvorsprung im Querschnitt dreieckig sind.

Bevorzugt sieht eine Fortbildung der Erfindung vor, dass auf einer anderen Seite des Kopfteils wenigstens ein Vorsprung gebildet ist.

Bei einer vorteilhaften Ausgestaltung der Erfindung kann vorgesehen sein, dass das Kopfteil auf der Oberseite abgerundet ist. Die abgerundete Form des Kopfteils ermöglicht es, die Aussparung an der Unterseite des Verkleidungsbauteils, in welcher das Kopfteil angeordnet wird, auf einfache Art und Weise, zum Beispiel durch Verwendung einer Kreissäge, bereitzustellen.

Eine Weiterbildung der Erfindung kann vorsehen, dass das Schaftteil etwa mittig an der Unterseite des Kopfteils angeordnet ist.

Eine bevorzugte Weiterbildung der Erfindung sieht vor, dass das Schaftteil im Querschnitt rund ist. Das Loch in der Unterkonstruktion, in welchem Schaffteil angeordnet wird, kann für diese Weiterbildung durch eine Bohrung bereitgestellt werden.

Bei einer zweckmäßigen Ausgestaltung der Erfindung kann vorgesehen sein, dass mehrere Schaftverankerungsvorsprünge im Wesentlichen gleichmäßig beabstandet entlang des Schaftteils angeordnet sind. Bei einer weiteren Ausführungsform kann vorgesehen sein, dass mehrere Schaftverankerungsvorsprünge in unregelmäßigen Abständen entlang des Schaftteils angeordnet sind, so dass wenigstens ein Bereich des Schaftteils eine größere Dichte von Schaftver-ankerungsvorsprüngen aufweist.

Eine vorteilhafte Ausführungsform der Erfindung sieht vor, dass mehrere Schaftverankerungsvorsprünge an gegenüberliegenden Seiten des Schaftteils angeordnet sind. Bei alternativen Ausführungsformen kann vorgesehen sein, dass mehrere Schaftverankerungsvorsprünge nur an einer Seite des Schaftteils gebildet sind oder dass mehrere Schaftverankerungsvorsprünge das Schaftteil umlaufend gebildet sind.

Bevorzugt sieht eine Fortbildung der Erfindung vor, dass das Kopfteil und das Schaftteil aus einem der folgenden Materialen sind: Edelstahl und Zinklegierung. Insbesondere die Verwendung des Materials Zinklegierung erlaubt eine kostengünstige Herstellung des Befestigungsmittels im Zinkdruckgussverfahren.

### Beschreibung bevorzugter Ausführungsbeispiele der Erfindung

Die Erfindung wird im Folgenden anhand von bevorzugten Ausführungsbeispielen unter Bezugnahme auf Figuren einer Zeichnung näher erläutert. Hierbei zeigen:
- Fig. 1: eine Seitenansicht der Seite des Befestigungsmittels, welche mehrere Verankerungsvorsprünge am Kopfteil aufweist,
- Fig. 2: eine Seitenansicht der anderen Seite des Befestigungsmittels, welche mehrere Vorsprünge aufweist,
- Fig. 3: eine Ansicht der Unterseite des Befestigungsmittels, und
- Fig. 4: einen Querschnitt des Befestigungsmittels.

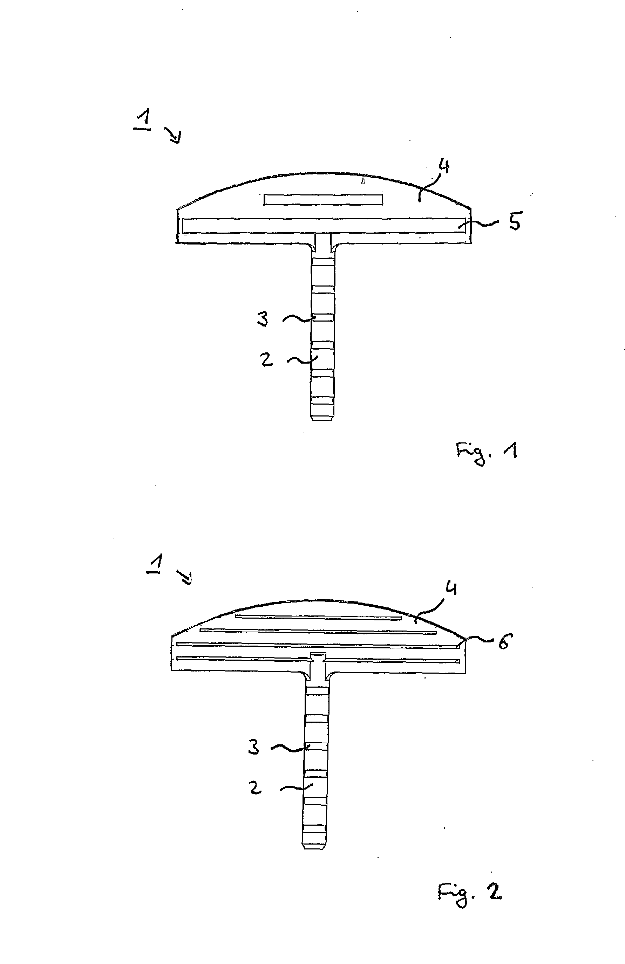

Fig. 1 zeigt das Befestigungsmittel 1 mit einem Schaftteil 2, welches mehrere Schaftverankerungsvorsprünge 3 aufweist, und einem am Schaftteil gebildeten Kopfteil 4, welches mehrere Kopfverankerungsvorsprünge 5 aufweist. Die Oberseite des Kopfteils 4 ist in dieser Ausführungsform abgerundet. Das Schaftteil 2 ist etwa mittig an der Unterseite des Kopfteils 4 angeordnet.

Das Befestigungsmittel 1 dient zum Befestigen eines Verkleidungsbauteil an einer Unterkonstruktion. Dazu wird ein Loch in die Unterkonstruktion gebohrt, in welchem dann das Schaftteil 2 des Befestigungsmittels 1 angeordnet wird. Aufgrund der mehreren Schaftverankerungsvorsprünge 3 wird das Schaftteil fest in der Unterkonstruktion gehalten. An der Unterseite des Verkleidungsbauteils wird, zum Beispiel mittels einer Kreissäge, eine Aussparung bereitgestellt. Die Aussparung nimmt das Kopfteil 4 des Befestigungsmittels 1 auf. Die mehreren Kopfverankerungsvorsprünge 5 gewähren sicheren Halt des Kopfteils 4 in der Aussparung an der Unterseite des Verkleidungsbauteils. Somit sind die Unterkonstruktion und das Verkleidungsbauteil durch das Befestigungsmittel 1 fest miteinander verbunden. Die Oberseite des Verkleidungsbauteils wird dabei nicht beschädigt.

Fig. 2 stellt eine Seitenansicht einer anderen Seite des Befestigungsmittels 1 dar. Auf der anderen Seite des Kopfteils 4 sind mehrere Vorsprünge 6 ausgebildet. Die Vorsprünge 6 bilden einen Kompromiss zwischen einer vollständig glatten Fläche, die zum Ausrichten des Befestigungsmittels 1 während des Einbaus zu bevorzugen ist, und einer Unterstützung des Halts durch die Kopfverankerungsvorsprünge 5, welche die Vorsprünge 6 auf der anderen Seite des Kopfteils 4 nach dem Anordnen in der Aussparung gewährleisten.

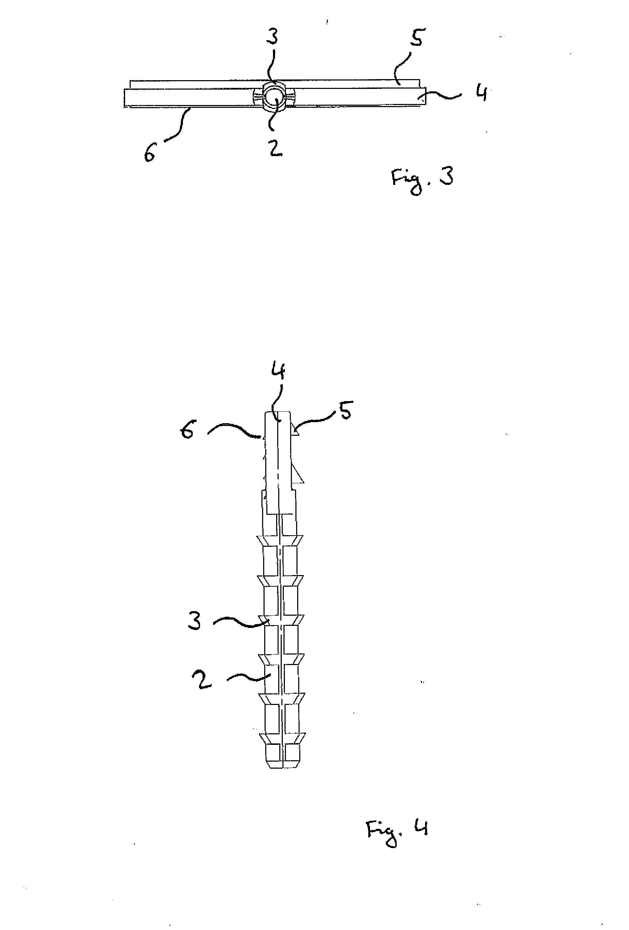

Eine Ansicht der Unterseite des Befestigungsmittels 1 wird in Fig. 3 dargestellt. Bei dieser Ausführung sind die Schaftverankerungsvorsprünge 3 an entgegen gesetzten Seiten des Schaftteils 2 angeordnet. Der Querschnitt des Schaftteils 2 ist in dieser Ausgestaltung rund.

Fig. 4 zeigt einen Querschnitt des Befestigungsmittels 1. Die mehreren Schaftverankerungsvorsprünge 3 und die mehreren Kopfverankerungsvorsprünge 5 sind mit Schrägen gebildet. Die Schrägen der mehreren Schaftverankerungsvorsprünge 3 und der mehreren Kopfverankerungsvorsprünge 5 weisen eine entgegen gesetzte Neigung zueinander auf. Die Querschnitte der mehreren Schaftverankerungsvorsprünge 3 und der mehreren Kopfverankerungsvorsprünge 5 sind dreieckig. Die Schaftverankerungsvorsprünge 3 sind im Wesentlichen gleichmäßig beabstandet entlang des Schaftteils 2 angeordnet.

Die in der vorstehenden Beschreibung, den Ansprüchen und der Zeichnung offenbarten Merkmale der Erfindung können sowohl einzeln als auch in beliebiger Kombination für die Verwirklichung der Erfindung in den verschiedenen Ausführungsformen von Bedeutung sein.

## Patentansprüche

1. Befestigungsmittel zum Befestigen eines Verkleidungsbauteils, insbesondere einer Diele, mit einem Schaftteil, welches wenigsten einen Schaftverankerungsvorsprung aufweist, und einem am Schaftteil gebildeten Kopfteil, welches als Flachkopf gebildet ist und auf einer Seite wenigstens einen Kopfverankerungsvorsprung aufweist.

2. Befestigungsmittel nach Anspruch 1, **dadurch gekennzeichnet, dass** der wenigstens eine Schaftverankerungsvorsprung und/oder der wenigstens eine Kopfverankerungsvorsprung mit einer Schräge gebildet sind.

3. Befestigungsmittel nach Anspruch 2, **dadurch gekennzeichnet, dass** die Schräge des wenigstens einen Schaftverankerungsvorsprungs und die Schräge des wenigstens einen Kopfverankerungsvorsprungs eine entgegengesetzte Neigung zueinander aufweisen.

4. Befestigungsmittel nach mindestens einem der vorangehenden Ansprüche, **dadurch gekennzeichnet, dass** der wenigstens eine Schaftverankerungsvorsprung und/oder der wenigstens eine Kopfverankerungsvorsprung im Querschnitt dreieckig sind.

5. Befestigungsmittel nach mindestens einem der vorangehenden Ansprüche, **dadurch gekennzeichnet, dass** auf einer anderen Seite des Kopfteils wenigstens ein Vorsprung gebildet ist.

6. Befestigungsmittel nach mindestens einem der vorangehenden Ansprüche, **dadurch gekennzeichnet, dass** das Kopfteil auf der Oberseite abgerundet ist.

7. Befestigungsmittel nach mindestens einem der vorangehenden Ansprüche, **dadurch gekennzeichnet, dass** das Schaftteil etwa mittig an der Unterseite des Kopfteils angeordnet ist.

8. Befestigungsmittel nach mindestens einem der vorangehenden Ansprüche, **dadurch gekennzeichnet, dass** das Schaftteil im Querschnitt rund ist.

9. Befestigungsmittel nach mindestens einem der vorangehenden Ansprüche, **dadurch gekennzeichnet, dass** mehrere Schaftverankerungsvorsprünge im Wesentlichen gleichmäßig beabstandet entlang des Schaftteils angeordnet sind.

10. Befestigungsmittel nach mindestens einem der vorangehenden Ansprüche, **dadurch gekennzeichnet, dass** mehrere Schaftverankerungsvorsprünge an gegenüberliegenden Seiten des Schaftteils angeordnet sind.

11. Befestigungsmittel nach mindestens einem der vorangehenden Ansprüche, **dadurch gekennzeichnet, dass** das Kopfteil und das Schaftteil aus einem der folgenden Materialen sind: Edelstahl und Zinklegierung.
